# EUROPÄISCHE PATENTSCHRIFT

(11) **EP 1 164 080 B1**
(45) Veröffentlichungstag und Bekanntmachung des Hinweises auf die Patenterteilung: **09.07.2003**
(21) Anmeldenummer: 00109939.9
(22) Anmeldetag: 11.05.2000
(51) Int. Cl.: B65B 29/02, B65B 9/08, B65B 61/12, B65B 51/22

(54) **Verfahren und Vorrichtung zum kontinuierlichen Herstellen von Aufgussbeuteln**
Method and apparatus for continuously manufacturing infusion bags
Procédé et machine pour la fabrication continue de sachets d'infusion

(43) Veröffentlichungstag der Anmeldung: 19.12.2001
(73) Patentinhaber: TEEPACK SPEZIALMASCHINEN GMBH & CO. KG, D-40667 Meerbusch (DE)
(72) Erfinder: Lohrey, Wilhelm, Dipl.-Ing., 40668 Meerbusch 3 (DE); Lambertz, Stefan, Dr., 50354 Hürth (DE); Groth, Wolfgang, 41844 Wegberg (DE)
(74) Vertreter: Stenger, Watzke & Ring Patentanwälte

(56) Entgegenhaltungen:
- EP-A- 0 095 542
- EP-A- 0 186 867
- EP-A- 0 448 325
- WO-A-93/07060

## Beschreibung

Die Erfindung betrifft ein Verfahren zum kontinuierlichen Herstellen von Aufgußbeuteln, insbesondere für Tee, durch Ablegen einzelner Substanzquanten auf einer Filterpapierbahn und Bildung eines Schlauches sowie durch Ausbildung einzelner allseitig geschlossener, jeweils mindestens ein Substanzquantum enthaltender Kammern durch Quernähte, die zugleich die hintere Naht des einen und die vordere Naht des folgenden Aufgußbeutels bilden. Die Erfindung betrifft weiterhin eine Vorrichtung zum kontinuierlichen Herstellen von Aufgußbeuteln, insbesondere für Tee, die eine Dosiervorrichtung für Substanzquanten und eine Vorrichtung zur Bildung eines Schlauches umfaßt, der durch Quersiegelung in einzelne Kammern unterteilt wird.

Verfahren und Vorrichtungen zum kontinuierlichen Herstellen von Aufgußbeuteln sowie entsprechende Aufgußbeutel sind in vielen Ausführungen bekannt. Bei einer der bekannten Ausführungen werden auf einer Filterpapierbahn einzelne Substanzquanten der auszulaugenden Substanz abgelegt und anschließend ein Schlauch gebildet, der durch Quersiegelungen in einzelne allseitig geschlossene, jeweils mindestens ein Substanzquantum enthaltende Kammern unterteilt wird. Die Schlauchbildung kann durch überlappendes Falten der Filterpapierbahn und Verschließen mittels einer Längsnaht oder durch Zuführen einer weiteren Filterpapierbahn und Anbringen von zwei Längsnähten erfolgen.

Aus der EP-A-0 448 325 waren sogenannte Doppelkammerbeutel bekannt, die aus zwei parallel zueinander liegenden Schläuchen hergestellt werden, welche jeweils durch Quersiegelungen in einzelne, jeweils ein Substanzquantum enthaltende Kammern unterteilt sind. Nach dem Vereinzeln der beiden parallel zueinander liegenden Beutel werden diese zuerst an der hinteren Siegelnaht verbunden, bevor die Beutel um diese Naht herum gefaltet und an der vorderen Siegelnaht verbunden werden. Ein das Etikett tragender Faden wird hierbei an der vorderen Siegelung befestigt. Bei einem weiteren Ausführungsbeispiel erfolgt die im Abstand liegende Querverbindung der hinteren Naht durch angeformte Endstücke, deren aneinander liegende Kanten zu einem W-förmigen Profil verbunden werden. Aus einer dritten Ausführungsform geht hervor, daß die parallel zueinander verlaufenden Kammern mittels Quemähten verbunden sind, die durch schräg verlaufende Einschnitte in einen mittleren Bereich und zwei seitlich anschließende, voneinander getrennte Bereiche aufgeteilt sind. Nach dem Trennen der einzelnen Doppelbeutel voneinander werden die hinteren Quemähte mittels der angeformten, durch den Einschnitt freigeschnittenen Lappen miteinander verbunden.

Der Erfindung liegt die **Aufgabe** zugrunde, ein einfaches Verfahren und eine konstruktiv einfache Vorrichtung zur kontinuierlichen Herstellung von Aufgußbeuteln zu schaffen, die mit hoher Geschwindigkeit zuverlässig arbeiten.

Die **Lösung** dieser Aufgabenstellung durch das erfindungsgemäße Verfahren ist dadurch gekennzeichnet, daß die Kammern durch Auseinanderziehen an einer zwischen den beiden Nähten liegenden Perforation vereinzelt und anschließend an einem Trägermaterial befestigt werden.

Das erfindungsgemäße Verfahren hat den Vorteil, daß nach dem Ablegen einzelner Substanzquanten auf einer Filterpapierbahn, nach Bildung eines Schlauches und Herstellung der allseitig geschlossenen Kammern durch eine einzige Quernaht die vorgesehene Perforation das Vereinzeln der Kammern erleichtert, bevor diese an dem Trägermaterial befestigt werden. Die Kammern des Schlauches werden durch einfaches Auseinanderziehen an der Perforation vereinzelt und anschließend an einer Trägermaterialbahn angeheftet. Das Auseinanderziehen um wenige Millimeter wird durch eine Geschwindigkeitserhöhung erreicht, so daß die vereinzelten Kammern an einer um den Vereinzelungsspalt längeren Trägermaterialbahn angeheftet werden. Da stets dieselben Quernähte erzeugt und allein durch Vereinzeln und Befestigen an einem Trägermaterial die Aufgußbeutel erzeugt werden, ergibt sich ein einfaches und kontinuierlich durchführbares Verfahren.

Auch die Trägermaterialbahn wird vor dem Befestigen oder gleichzeitig mit dem Befestigen der Kammern perforiert, so daß die an der Trägermaterialbahn angehefteten bzw. anzuheftenden Kammern durch Auseinanderziehen der Trägermaterialbahn vereinzelt werden. Die Kammern können entweder durch überlappendes Längsfalten und Verschließen der Filterpapierbahn mittels einer Längsnaht oder aus mindestens zwei Filterpapierbahnen, die parallel zueinander neben und/oder übereinander angeordnet werden (mehrbahnige Verfahrensweise), gebildet werden.

Mit dem erfindungsgemäßen Verfahren ist es möglich, an der Trägermaterialbahn gleichzeitig oder nacheinander die vereinzelten Kammern zweier Kammerschläuche zu befestigen, so daß bevorzugt Doppelkammerbeutel hergestellt werden. Gemäß einem weiteren Merkmal der Erfindung können beim Herstellen der Quernaht seitlich von der Perforation zwei Ecken ausgestanzt werden, so daß die vordere Naht V-förmig verläuft. Die Perforation beschränkt sich auf den mittleren Bereich der Quernaht. Der Aufgußbeutel erhält eine besondere Kopfgestaltung.

Die erfindungsgemäße Vorrichtung zum kontinuierlichen Herstellen von Aufgußbeuteln umfaßt eine Dosiervorrichtung für die Substanzquanten und eine Vorrichtung zur Bildung eines Schlauches, der durch Quersiegelungen in einzelne Kammern unterteilt wird. Sie ist dadurch gekennzeichnet, daß in der Quersiegelstation eine Sonotrode angeordnet ist, die im Zusammenwirken mit einer Ausnehmung für die in den Kammern befindlichen Substanzquanten enthaltenden Siegelwalze eine durch eine Perforation getrennte Doppelnaht herstellt, und daß eine weitere Station vorgesehen ist, in der die Kammern durch Auseinanderziehen vereinzelt und an einer perforierten Trägermaterialbahn befestigt werden.

Diese weitere Station ist ebenfalls mit einer Sonotrode und einer Siegelwalze zum Anschweißen der vereinzelten Kammern an die Trägermaterialbahn durch Ultraschall ausgestattet. In dieser weiteren oder in einer gleichartigen zusätzlichen Station können die Kammern eines zweiten Kammerschlauches an die Trägermaterialbahn angeschweißt werden, so daß Doppelkammerbeutel entstehen.

Schließlich umfaßt die erfindungsgemäße Vorrichtung eine Trennstation für das Vereinzeln der mit jeweils einer oder zwei Kammern verbundenen Abschnitte der Trägermaterialbahn.

Weitere Einzelheiten, Merkmale und Vorteile des Gegenstandes der Erfindung ergeben sich aus der nachfolgenden Beschreibung der zugehörigen Zeichnung, in denen das erfindungsgemäße Verfahren und die zugehörige Vorrichtung schematisch dargestellt sind. In der Zeichnung zeigt:
- Fig. 1: ein Schema der erfindungsgemäßen Vorrichtung,
- Fig. 2 - 9: jeweils eine Seitenansicht und eine Draufsicht auf das mit der Vorrichtung hergestellte Produkt an den im Schema gekennzeichneten Stellen und
- Fig. 10: eine vergrößerte Darstellung der Doppelnaht.

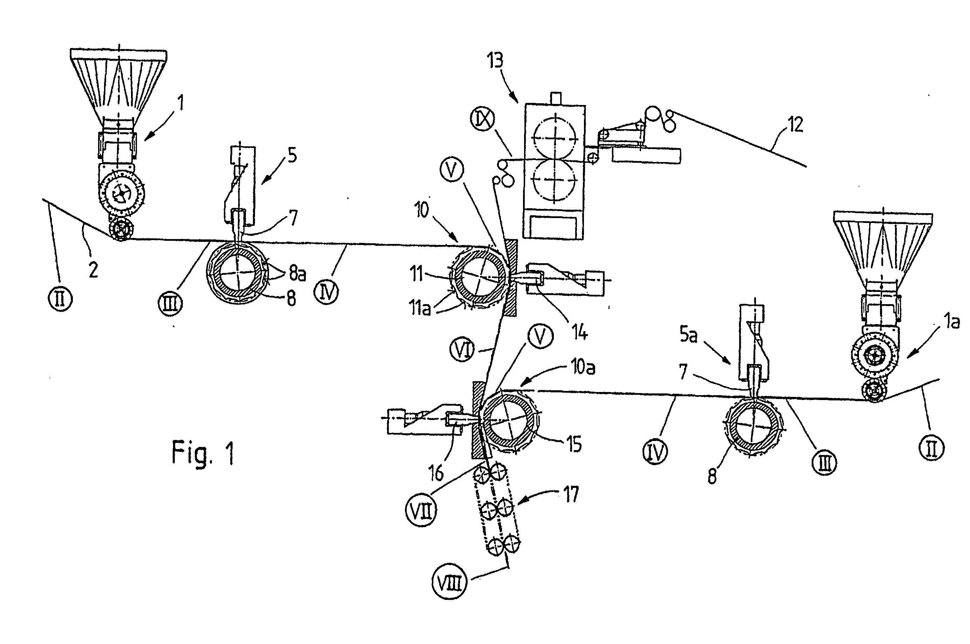

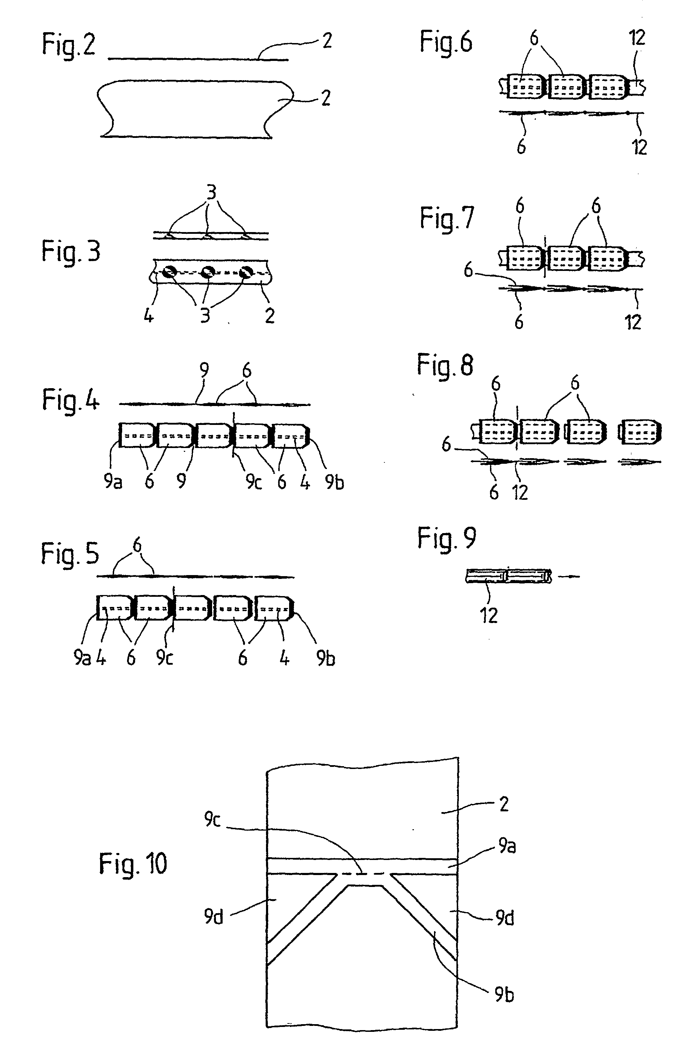

Die in Fig. 1 schematisch dargestellte Vorrichtung umfaßt eine Dosiervorrichtung 1, die auf eine Filterpapierbahn 2 gemäß Fig. 2 einzelne Substanzquanten 3 (siehe Fig. 3) ablegt und die Filterpapierbahn 2 durch überlappendes Falten um ihre Längsachse zu einem Schlauch formt und durch eine in Fig. 3 angedeutete Längsnaht 4 verschließt.

in einer Quersiegelstation 5 wird der Schlauch in einzelne allseits geschlossene Kammern 6 unterteilt. Zu diesem Zweck ist eine Sonotrode 7 vorgesehen, die mit einer Siegelwalze 8 zusammenwirkt. Die Siegelwalze 8 hat Ausnehmungen 8a für das in der jeweiligen Kammer 6 enthaltene Substanzquantum 3 und dreht sich mit einer der Geschwindigkeit der zugeführten Filterpapierbahn 2 entsprechenden Drehzahl.

Wie Fig. 4 erkennen läßt, besteht die Quersiegelung aus einer Doppelnaht 9, die jeweils eine hintere Naht 9a und eine vordere Naht 9b umfaßt. Zwischen diesen Nähten 9a und 9b wird eine Perforation 9c ausgebildet, wie dies die vergrößerte Zeichnung in Fig. 10 zeigt.

In dieser Zeichnung ist weiterhin zu erkennen, daß gleichzeitig mit der Doppelnaht 9 zwei dreieckförmige Ecken 9d seitlich vom mittleren Steg der vorderen Naht 9b ausgestanzt werden. Die Perforation 9c beschränkt sich demgemäß auf den mittleren Bereich. Die vordere Naht 9b, die den Kopfbereich des Aufgußbeutels bildet, hat die Form eines V mit dem mittleren Steg als Scheitelpunkt.

Die in einzelne Kammern 6 unterteilte Filterpapierbahn 2 wird nunmehr einer weiteren Station 10 zugeführt, in der die Kammern 6 an der Perforation 9c durch Auseinanderziehen getrennt werden. Sie werden zu diesem Zweck einer mit Ausnehmungen 11a versehenen Siegelwalze 11 zugeführt, deren Umlaufgeschwindigkeit geringfügig größer ist als die Zulaufgeschwindigkeit der Filterpapierbahn 2.

Bei einer praktischen Ausführung haben die Kammern eine Länge von 63 mm und werden 5 mm voneinander getrennt. Die Umlaufgeschwindigkeit der Siegelwalze 11 ist um diesen Betrag größer als die der Siegelwalze 8.

Im Bereich der weiteren Station 10 werden die vereinzelten Kammern 6 an eine Trägermaterialbahn 12 angeheftet, die in einer Durchlaufstation 13 längs geschnitten und perforiert wird, wie dies die Fig. 9 zeigt. Das Anheften geschieht mittels Ultraschall durch eine Sonotrode 14 im Bereich des mittleren Steges der vorderen Naht 9b. An der durch VI gekennzeichneten Stelle ist somit an einer Seite der Trägermaterialbahn 12 eine Reihe von Kammern 6 im gleichen Abstand voneinander angeheftet, wie dies die Fig. 6 zeigt.

In dem Schema nach Fig. 1 ist zu erkennen, daß durch eine Dosiervorrichtung 1a auf einer weiteren Filterpapierbahn 2 Substanzquanten abgelegt werden und die Filterpapierbahn 2 zu einem Schlauch geformt wird, der in einer weiteren Quersiegelstation 5a in einzelne Kammern 6 unterteilt wird. Auch in dieser Quersiegelstation 5a wird mittels einer Sonotrode 7 und einer Siegelwalze 8 eine Doppelnaht 9 erzeugt, die aus einer hinteren Naht 9a, einer vorderen Naht 9b und einer dazwischen liegenden Perforation 9c besteht, wobei Ecken 9d ausgestanzt werden. An der mit IV gekennzeichneten Stelle liegt somit ein weiterer Kammerschlauch vor, der nunmehr einer der Station 10 entsprechenden Station 10a zugeführt wird.

In dieser zusätzlichen Station 10a werden die Kammern 6 der zweiten Filterpapierbahn 2 durch Auseinanderziehen mittels einer Siegelwalze 15 vereinzelt. Gleichzeitig werden sie mittels einer Sonotrode 16 an die freie Seite der Trägermaterialbahn 12 angeheftet, und zwar im Bereich des mittleren Steges ihrer vorderen Naht 9b. An der mit VII gekennzeichneten Stelle liegt somit gemäß Fig. 7 eine Trägermaterialbahn 12 vor, an deren beiden Seiten Kammern 6 angeheftet sind.

In einer Trennstation 17 wird nunmehr die Trägermaterialbahn 12 an der Perforation auseinandergezogen. Hiermit ergibt sich ein Trennen und Vereinzeln der im Ausführungsbeispiel durch zwei Kammern 6 und den Abschnitt der Trägermaterialbahn 12 gebildeten Aufgußbeuteln gemäß Fig. 8.

### Bezugszeichenliste

- 1: Dosiervorrichtung
- 1a: Dosiervorrichtung
- 2: Filterpapierbahn
- 3: Substanzquantum
- 4: Längsnaht
- 5: Quersiegelstation
- 5a: Quersiegelstation
- 6: Kammer
- 7: Sonotrode
- 8: Siegelwalze
- 8a: Ausnehmung
- 9: Doppelnaht
- 9a: hintere Naht
- 9b: vordere Naht
- 9c: Perforation
- 9d: Ecke
- 10: Station
- 10a: Station
- 11: Siegelwalze
- 11a: Ausnehmung
- 12: Trägermaterial
- 13: Durchlaufstation
- 14: Sonotrode
- 15: Siegelwalze
- 16: Sonotrode
- 17: Trennstation

## Patentansprüche

1. Verfahren zum kontinuierlichen Herstellen von Aufgußbeuteln, insbesondere für Tee, durch Ablegen einzelner Substanzquanten (3) auf einer Filterpapierbahn (2) und Bildung eines Schlauches sowie durch Ausbildung einzelner allseitig geschlossener; jeweils mindestens ein Substanzquantum (3) enthaltender Kammern (6) durch Quernähte (9), die zugleich die hintere Naht (9a) des einen und die vordere Naht (9b) des folgenden Aufgußbeutels umfassen,
**dadurch gekennzeichnet,**
**daß** die Kammern (6) durch Auseinanderziehen an einer zwischen den beiden Nähten (9a, 9b) liegenden Perforation (9c) vereinzelt und anschließend an einem Trägermaterial (12) befestigt werden.

2. Verfahren nach Anspruch 1, **dadurch gekennzeichnet, daß** die Befestigung der Kammern (6) an dem Trägermaterial (12) durch Verschweißen mittels Ultraschall erfolgt.

3. Verfahren nach Anspruch 1 oder 2, **dadurch gekennzeichnet, daß** die Trägermaterialbahn (12) vor oder gleichzeitig mit der Befestigung der Kammern (6) perforiert wird.

4. Verfahren nach einem der Ansprüche 1 bis 3, **dadurch gekennzeichnet, daß** auch die Quernähte (8) durch Ultraschall hergestellt werden.

5. Verfahren nach einem der Ansprüche 1 bis 4, **dadurch gekennzeichnet, daß** beim Herstellen der Quemaht (9) seitlich von der Perforierung (9c) zwei Ecken (9d) ausgestanzt werden, so daß die vordere Naht (9) V-förmig verläuft.

6. Verfahren nach mindestens einem der Ansprüche 1 bis 5, **dadurch gekennzeichnet, daß** an der Trägermaterialbahn (12) gleichzeitig oder nacheinander die vereinzelten Kammern (6) zweier Schläuche befestigt werden.

7. Verfahren nach mindestens einem der Ansprüche 1 bis 6, **dadurch gekennzeichnet, daß** die an der Trägermaterialbahn (12) angehefteten Kammern (6) durch Auseinanderziehen der Trägermaterialbahn (12) vereinzelt werden.

8. Verfahren nach einem der Ansprüche 1 bis 7, **dadurch gekennzeichnet, daß** die Kammern (6) durch überlappendes Längsfalten und Verschließen der Filterpapierbahn (2) mittels einer Längsnaht (4) gebildet werden.

9. Verfahren nach einem der Ansprüche 1 bis 7, **dadurch gekennzeichnet, daß** die Kammern (6) durch Ultraschallschweißen aus mindestens zwei parallel neben- und/oder übereinander angeordneten Filterpapierbahnen gebildet werden.

10. Vorrichtung zur kontinuierlichen Herstellung von Aufgußbeuteln, insbesondere für Tee, die eine Dosiervorrichtung (1, 1a) für Substanzquanten (3) und eine Vorrichtung zur Bildung eines Schlauches umfaßt, der durch Quersiegelungen in einzelne Kammern (6) unterteilt wird,
**dadurch gekennzeichnet,**
**daß** in der Quersiegelstation (5, 5a) eine Sonotrode (7) angeordnet ist, die im Zusammenwirken mit einer Ausnehmungen (8a) für die in den Kammern (6) befindlichen Substanzquanten (3) enthaltenden Siegelwalze (8) eine durch eine Perforation (9c) getrennte Doppelnaht (9) herstellt, und daß eine weitere Station (10, 10a) vorgesehen ist, in der die Kammern (6) durch Auseinanderziehen vereinzelt und an einer Trägermaterialbahn (12) befestigt werden.

11. Vorrichtung nach Anspruch 10, **dadurch gekennzeichnet, daß** die weitere Station (10, 10a) ebenfalls mit einer Sonotrode (14, 16) und einer Siegelwalze (11, 15) zum Anschweißen der vereinzelten Kammern (6) an die Trägermaterialbahn (12) durch Ultraschall ausgestattet ist.

12. Vorrichtung nach Anspruch 10 oder 11, **dadurch gekennzeichnet, daß** in der weiteren oder in einer gleichartigen zusätzlichen Station (10a) die Kammern (6) eines zweiten Kammerschlauches an die Trägermaterialbahn (12) angeschweißt werden.

13. Vorrichtung nach mindestens einem der Ansprüche 10 bis 12, **dadurch gekennzeichnet, daß** eine Trennstation (17) für das Vereinzeln der mit jeweils einem oder zwei Kammern (6) verbundenen Abschnitte der Trägermaterialbahn (12) vorgesehen ist.

## Claims

1. Method for continuously manufacturing infusion bags, in particular for tea, by depositing individual substance quantities (3) on a filter paper web (2) and forming a tube, and by creating individual compartments (6), which are closed all-round and which each contain at least one substance quantity (3), by transverse seams (9) which comprise both the rear seam (9a) of one infusion bag and the front seam (9b) of the subsequent infusion bag,
**characterised in that** the compartments (6) are separated by pulling them apart at perforations (9c) lying between the two seams (9a, 9b) and are then fastened to a carrier material (12).

2. Method according to Claim 1, **characterised in that** the compartments (6) are fastened to the carrier material (12) by welding by means of ultrasound.

3. Method according to Claim 1 or 2, **characterised in that** the carrier material web (12) is perforated before or at the same time as the compartments (6) are fastened.

4. Method according to any one of Claims 1 to 3, **characterised in that** the transverse seams (8) are also produced by ultrasound.

5. Method according to any one of Claims 1 to 4, **characterised in that** two corners (9d) are punched out to the side of the perforations (9c) upon producing the transverse seam (9), so that the front seam (9) extends in the shape of a V.

6. Method according to at least one of Claims 1 to 5, **characterised in that** the separated compartments (6) of two tubes are fastened to the carrier material web (12) at the same time or in succession.

7. Method according to at least one of Claims 1 to 6, **characterised in that** the compartments (6) which are attached to the carrier material web (12) are separated by pulling the carrier material web (12) apart.

8. Method according to any one of Claims I to 7, **characterised in that** the compartments (6) are formed by overlapping longitudinal folding and closing of the filter paper web (2) by means of a longitudinal seam (4).

9. Method according to any one of Claims 1 to 7, **characterised in that** the compartments (6) are formed by ultrasonic welding from at least two filter paper webs disposed in parallel side by side and/or one on top of the other.

10. Apparatus for continuously manufacturing infusion bags, in particular for tea, which comprises a metering apparatus (1, 1a) for substance quantities (3) and an apparatus for forming a tube, which is divided into individual compartments (6) by transverse seals,
**characterised in that** a sonotrode (7) is disposed in the transverse sealing station (5, 5a), which sonotrode, in co-operation with a sealing roller (8) containing recesses (8a) for substance quantities (3) located in the compartments (6), produces a double seam (9) which is divided by perforations (9c), and that a further station (10, 10a) is provided in which the compartments (6) are separated by pulling them apart and fastened to a carrier material web (12).

11. Apparatus according to Claim 10, **characterised in that** the further station (10, 10a) is likewise provided with a sonotrode (14, 16) and a sealing roller (11, 15) for welding the separated compartments (6) onto the carrier material web (12) by ultrasound.

12. Apparatus according to Claim 10 or 11, **characterised in that** the compartments (6) of a second compartment tube are welded onto the carrier material web (12) in the further or in a similar additional station (10a).

13. Apparatus according to at least one of Claims 10 to 12, **characterised in that** a dividing station (17) is provided for separating the portions of the carrier material web (12) which are joined to one or two compartment(s) (6) in each case.

## Revendications

1. Procédé pour la fabrication en continu de sachets d'infusion, en particulier pour du thé, par dépôt de doses de substance individuelles (3) sur une bande de papier-filtre (2) et par formation d'une gaine ainsi que par confection de compartiments individuels (6) fermés de tous côtés, contenant chacun au moins une dose de substance (3), par l'intermédiaire de joints transversaux (9), lesquels forment en même temps le joint arrière (9a) de l'un des sachets d'infusion et le joint avant (9b) du sachet d'infusion suivant, **caractérisé en ce que** les compartiments (6) sont détachés en étant étirés au niveau d'une perforation (9c) située entre les deux joints (9a, 9b) et sont ensuite fixés (12) à un matériau porteur.

2. Procédé selon la revendication 1, **caractérisé en ce que** la fixation des compartiments (6) au matériau porteur (12) s'effectue par soudage au moyen d'ultrasons.

3. Procédé selon la revendication 1 ou 2, **caractérisé en ce que** la bande de matériau porteur (12) est perforée avant ou simultanément à la fixation des compartiments (6).

4. Procédé selon une des revendications 1 à 3, **caractérisé en ce que** les joints transversaux (8) sont également réalisés par ultrasons.

5. Procédé selon une des revendications 1 à 4, **caractérisé en ce que**, lors de la réalisation du joint transversal (9), deux coins (9d) sont découpés latéralement par rapport à la perforation (9c), de sorte que le joint avant (9) présente un tracé en forme de V.

6. Procédé selon au moins une des revendications 1 à 5, **caractérisé en ce que** les compartiments détachés (6) de deux gaines sont fixés simultanément ou successivement à la bande de matériau porteur (12).

7. Procédé selon au moins une des revendications 1 à 6, **caractérisé en ce que** les compartiments (6) reliés à la bande de matériau porteur (12) sont détachés par étirement de la bande de matériau porteur (12).

8. Procédé selon une des revendications 1 à 7, **caractérisé en ce que** les compartiments (6) sont formés par pliage longitudinal par superposition et par fermeture de la bande de papier-filtre (2) au moyen d'un joint longitudinal (4).

9. Procédé selon une des revendications 1 à 7, **caractérisé en ce que** les compartiments (6) sont formés par soudage ultrasonique à partir d'au moins deux bandes de papier-filtre juxtaposées et/ou superposées parallèlement.

10. Dispositif pour la fabrication en continu de sachets d'infusion, ledit dispositif comprenant un dispositif de dosage (1, 1a) pour des doses de substance (3) et un dispositif pour la formation d'une gaine, laquelle est divisée en compartiments individuels (6) par scellage transversal, **caractérisé en ce que** dans la station de scellage transversal (5, 5a) est disposée une sonotrode (7) qui, par action conjointe avec un tambour de scellement (8) contenant des évidements (8a) pour les doses de substance (3) situées dans les compartiments (6), réalise un double joint (9) séparé par une perforation (9c), et **en ce qu'**il est prévu une station supplémentaire (10, 10a) dans laquelle les compartiments (6) sont détachés par étirement et fixés à une bande de matériau porteur (12).

11. Dispositif selon la revendication 10, **caractérisé en ce que** la station supplémentaire (10, 10a) est elle aussi équipée d'une sonotrode (14, 16) et d'un tambour de scellement (11, 15) pour le soudage par ultrasons des compartiments détachés (6) à la bande de matériau porteur (12).

12. Dispositif selon la revendication 10 ou 11, **caractérisé en ce que**, dans la station supplémentaire ou dans une autre station de même nature (10a), les compartiments (6) d'une seconde gaine de compartiments sont soudés à la bande de matériau porteur (12).

13. Dispositif selon au moins une des revendications 10 à 12, **caractérisé en ce qu'**une station de séparation (17) est prévue pour détacher les portions de la bande de matériau porteur (12) reliées chacune à un ou deux compartiments (6).
